Europäisches Patentamt

European Patent Office

Office européen des brevets

(19)

(11) Publication number: **0 108 859**
A2

(12) **EUROPEAN PATENT APPLICATION**

(21) Application number: 83105049.7

(22) Date of filing: 21.05.83

(51) Int. Cl.³: **C 23 F 15/00,** C 09 D 5/08, F 01 N 7/16

(30) Priority: 02.06.82 IT 2166082

(71) Applicant: **Muzzi, Maria Grazia, Via Kennedy, 3, S. Donato Milanese (Milano) (IT)**

(43) Date of publication of application: 23.05.84 Bulletin 84/21

(72) Inventor: **Muzzi, Maria Grazia, Via Kennedy, 3, S. Donato Milanese (Milano) (IT)**

(84) Designated Contracting States: **AT BE CH DE FR GB LI LU NL SE**

(74) Representative: **Gervasi, Gemma et al, Studio Brevetti e Marchi NOTARBARTOLO & GERVASI 33, Viale Bianca Maria, I-20122 Milano (IT)**

(54) Protective composition for increasing the service life of exhaust pipes on internal combustion engines.

(57) Protective composition with anticorrosion action for exhaust pipes on internal combustion engines, comprising of a neutralizing substance with a neutralizing effect for acids present in the exhaust gases of internal combustion engines, a substance for binding or support, a thickening substance and a dissolving and/or dispersing liquid which can evaporate under the normal operating conditions of the exhaust pipe.

EP 0 108 859 A2

- 1 -

PROTECTIVE COMPOSITION FOR INCREASING THE SERVICE LIFE
OF EXHAUST PIPES ON INTERNAL COMBUSTION ENGINES

The automotive industry is today seriously drawing its attention to a series of problems which up to a few years ago were either unknown or at least only considered of secondary importance.

Very little, or nothing at all, used to be done to provide longterm corrosion protection for all internal or external unpainted parts, for all functional components and for all those detail parts which normally have to be replaced several times during the life of the motor vehicle as, for example, the final end sections of the exhaust pipe, which includes, therefore, the expansion parts, commonly referred to as the "muffler".

The recent, worldwide energy crisis and the large increase in labor costs have caused a rapid inversion of the policy trend among automobile manufacturers.

At the same time, automobile owners are now induced to integrate and refurbish all the gamut of products already used by automobile manufacturers to extend the life of various parts of the automobile.

More and more often, the automobile owner takes it upon himself to apply, for the first time, products which the automobile manufacturer himself has not yet begun applying, as standard practice, on his production automobiles. For this reason, there is a vast gamut of products on the market which are opportunely packaged to simplify the car owner's job in preserving the various parts of his automobile that are subject to deterioration. From this point of view, all car owners know that one part whose refurbishing cost begins to effectively be quite considerable is the exhaust pipe. This is mainly due to the cost of labor, in relation to the fact that the disassembly of the parts to be replaced is generally an operation which very often entails certain difficulties. The exhaust pipe sections which are predominantly subject to deterioration are, generally, the last two sections, while those nearer the exhaust manifold can remain in good working order even over the full service life of the vehicle.

The prime cause of deterioration is mainly the corrosion to which the internal metallic surfaces are subjected, in relation to the fact that the exhaust gases, which are acid due to the oxidation products of the combustion residues, coming in contact with the cooler surfaces of the downstream end of the exhaust tube, condense and become trapped, especially at the bottom of the muffler, and cannot be expulsed easily from there.

This also starts off a series of electrochemical phenomena, which are well known to corrosion experts, that are an integral part of the causes of corrosion. When a motor vehicle is used intermittently, the longer inactive periods are those during which the acid condensate acts on the inner walls of the muffler until it completely corrodes it. A remedy for this problem was sought by

0108859

building the exhaust-tube end sections out of metallic alloy which was less corrodable, but this approach made the costs of the exhaust tube considerably higher. Another system, which was adopted by some users, was the one where drainage holes were made in the lowest areas of the metallic parts of the exhaust system. Not always, however, was it possible to guess where the most appropriate points were for making these holes and, furthermore, annoying acoustical effects were immediately obtained.

Internal painting, using various types of paint, for covering and protecting the metallic surfaces exposed to corrosion have given poor pratical results, because anchoring of the usual types of paint is compromised by the frequent dilations and contractions of the metallic surfaces.

The problem, according to the present state of the art, is up to now and still today, to a great extent, unresolved, while interest on the part of the user is growing and, for certain aspects, also on the part of the manufacturers, as regards finding a simple and economic solution for resolving the problem.

The object of this invention is a system based on the use of specific compositions for extending the service life of exhaust tubes for motor wehicle engines, industrial vehicle engines and also for fixed engine installations.

The application of this present invention is valid both for components before their assembly and mounting onto motor vehicles and when the exhaust tube is mounted in its definitive position on the motor vehicle.

The composition of the exhaust gases varies with the type of engine, with the service conditions, with the type of fuel, etc.

All exhaust gases, however, have the same common characteristic of containing water vapor and substances which are prevalently acid and responsible for attcking the ferrous parts of the muffler.

The invention is based on the use of mixtures (or compositions) which are neutralizing, not volatile, of simple constitution and opportunely formulated with support substances capable of giving the composition the characteristics of density, softening point, viscosity and adhesiveness, opportune for its application.

The composition is then diluted or dispersed in solvents having the appropriate chemical and physical characteristics for facilitating its application. Finally, the various compositions can contain an anti-rust which acts during the vapor phase to lower, if not annul, the corrosive action of the acid substances when they have not yet condensed.

The use of these compositions has clearly shown that the average service life of the exhaust-end parts of the exhaust system, particularly for motor vehicles used intermittently, can be at least doubled, with a cost which is much inferior to that required for the replacement of the said parts.

Concerning the methods of application of the composition, which is the object of this invention, it is opportune to make certain observations. The application is made possible by the fact that the tube which constitutes the "core" of the muffler is always discontinuous and has holes so as to provide silencing. It is through these discontinuities or these holes that the neutralizing product - opportunely made fluid - comes in contact with the internal surface of the muffler housing. When the solvent has evaporated, the product gets hard and becomes a very consistent paste. At running temperature, when the parts are heated to typical temperature values, partial fluidification occurs, which provides for better distibution in the lower areas of the muffler; that is, right in the places where the acid condensates gather.

By opportunely dosing the fluidity by means of solvents and in relation to the concentration of the active composition and its softening point, it is very simple to introduce the right product dose into the disassembled exhaust-system parts prior to mounting them.

With distributors which are fitted with probes that are adequately long and flexible, application can be effected even with exhaust pipes already assembled onto a motor vehicle.

In any case, whether the application is done during the fitting of the exhaust pipes or when the pipe is already mounted onto the motor vehicle, the distribution of the solution or dispersion onto the internal surfaces in question should be done with the use of pressure-type distributing systems, which can consist of simple aerosols with relative probes or centralized systems such as those used for spray painting; taking care to see that the spray nozzel is attached to the end of a flexible tube of the right length so that the spraying action can take place where all of the internal surfaces in question can be adequately covered.

The compositions to which the present invention refers are constituted by the following components:

a) Neutralizing substances: can be constituted by oxides or hydroxides of alckaline or alkaline earth metals, or by alkaline or alkaline earth metal salts from weak organic or inorganic acids, such as carbonic, boric, formic, acetic and, in general, aliphatic or aromatic type carboxylic acids, containing up to 30 atoms of carbon, such as benzoic, phthalic, naphthalic, ligninic acids, fatty acids and also alkaline phenolates.

These salts, when from long-chain organic acids, can be hyperbasic; that is, they can have a stechiometric metal content which is much greater than the theoretical value. This is possible by using techniques which are well known, and these types of products are readily available on the market.

Still considering neutralizing substances, certain ammonia salts, especially monoethanolamine, diethanolamine and triethanolamine salts, morpholine salts and the more complex amine salts must be taken into consideration.

In any case, logically, the acids for these types of salts must also be weak organic or inorganic salts, as mentioned above. The essential requisite for which neutralizing substance to use is that it is not volatile and has a persistent effect at the temperature to which the protective composition is subjected, the temperature range being between 150 and 400°C, depending on the particular zone of the exhaust pipe.

b) Binding or support substances: involves solid or semisolid substances having the consistency of wax or grease or is syrupy, and are chemically inert and act as diluters or vehicles for the neutralizing substances, combining with them to produce a final product of the right consistency, both when cold and when hot, so that the product can be appropriately distributed over the bottom of the muffler. Obviously, they must be stable at the temperatures to which the protective composition is subjected, including, as mentioned above, between 150° and 400°C. The substances that can do this are quite varied.

For example, without thereby implying any limitations, one could cite petrolatums, paraffins, natural or synthetic waxes, tars, pitches, lubricating grease and certain polymers having rather low molecular weights. Some of these excipients could also have inherent neutralizing characteristics and, therefore, could also be considered as forming part of group a).

c) Substances which cause densing, soap types, alkalines and alkaline earths, silica gel, modified bentonites, resinates ect. Also for this componet, there is the general requisite of good stability or, at any rate, a lasting effect at the working temperatures of the protective composition.

In the composition, according to this invention, the abovementioned components can be present in different ratios, by weight, which cover a wide range. The neutralizing substance can be present from 1 to 95% by weight of the total weight. The binding or support substance can be present between 1 and 50%, and the densing substance between 1 and 50%.

The protective composition, according to the invention, is, furthemore, mixed with a liquid which is a solvent

- 8 -

0108859

and/or dispersant, in order to obtain an end product which is fluid enough to facilitate the applying and distribution of the product on the inner surface of the exhaust pipe.

This dissolving and/or dispersing liquid must be volatile enough to evaporate easily, after the protective composition has been applied, under the effect of the elevated temperatures to which the protective coating is subjected when the exhaust gases pass through the exhaust pipe.

For this purpose, hydrocarbon liquids and, preferably chloroted solvents - which have the advantage of not being flammable - can be used.

The amount of dissolving and/or dispersing liquid used is between 1 and 5 parts per weight per part of protective composition.

The example given below are by way of illustrating certain pratical realizations of the invention and are not, in any way, intended to imply any limitations as to the realization possibilities of the invention.

\* \* \*

Example 1

The composition consists of:

| | | |
|---|---|---|
| | Calcium oxide | 50% |
| Active Substance | Petrolatum (90-95°C m.p.) | 30% |
| | Neutral sodium alkylbenzenesulphonate | 20% |

Solvent: trichloroethylene

Active substance ratio: solvent = 1:1 by weight.

Preparation: The petrolatum is melted and the mass is kept at about 80°C. The sulphonated sodium is added and, still at the same temperature, the calcium oxide is dispersed by means of either a turbine-type agitator or a colloidal mill.

The mixture thus obtained is diluted with an equal weight of trichloroethylene, thus obtaining a product which is ready for use or for storing in appropriate containers.

Example 2

Active Substance
| Precipitated calcium carbonate | 30% |
| Anhydrous sodium carbonate | 30% |
| Oleated triethanolamine | 20% |
| Petrolatum (90-95°C m.p.) | 20% |

Solvent: trichloroethylene

Active substance ratio: solvent = 1:1.5

Preparation: The petrolatum is melted and heated up to 70°C.

The oleated triethanolamine and two carbonates are added, one after the other, while agitating. The mixture is homogenized by the same means as described in example 1.

Example 3

Active Substance
| Precipitated calcium carbonate | 15% |
| Lubricating grease with soda base (consisting of 15% sodium stearate and 85% naphthenic mineral oil) | 20% |
| Petrolatum (90-95°C m.p.) | 65% |

Solvent: chlorated type such as trichloroethylene, trichloroethane, etc.

Active substance ratio: solvent = 1:1

Preparation : The petrolatum is melted and heated to a temperature of about 100°C. The soda-base grease is added while mixing energetically.

Once a homogeneous mixture is obtained, the calcium carbonate is added and, finally, the solvent.

Example 4

Active Substance

Low-molecular-weight polyethylene
(about 1000)                                   15%
Hyperbasic calcium alkylbenzene-
sulphonate                                     70%
Precipitated barium carbonate                  15%

Active substance ratio :   solvent = 1:1 Preparation:   The polyethylene is made to melt by heating up to 150°C.

While agitating, the calcium sulphonate is added. When the mass has cooled down again to about 100°C, the barium carbonate is added and the mass is thoroughly homogenized. Dilution is by means of the solvent, which is mainly trichloroethane or trichloroethylene, and while strongly agitating.

Claims

1) Protective composition having anticorrosion action for exhaust gas pipes used on internal combustion engines installed on motor vehicles or on stationary installations, and including:

a) a neutralizing component for acids present in the exhaust gases, consisting of an oxide, hydrate or salt of a weak organic or inorganic acid, of alkaline or alkaline-earth metals;

b) a binding or support component with a solid or semisolid consistency which is capable of proving the composition with a consistency that is appropriate for the forming of a stable, protective layer;

c) a densing component.

2) Protective composition of claim 1 mixed with a dissolving and/or dispersing liquid, evaporatable under the composition's working conditions, so as to obtain a fluid product capable of being easily applied to the internal surface of an exhaust pipe.

3) Composition, according to claim 2, constituted by:
- 50 parts, by weight, of calcium oxide
- 30 parts, by weight, of petrolatum (90-95°C m.p.)
- 20 parts, by weight, of neutral sodium alkylbenzene-sulphonate
- 100 parts, by weight, of trichloroethylene

4) Composition, according to claim 2, constituted by:
- 30 parts, by weight, of precipitated calcium carbonate

- 30 parts, by weight, of anhydrous sodium carbonate
- 20 parts, by weight, of petrolatum (90-95°C m.p.)
- 150 parts, by weight, of trichloroethylene

5) Composition, according to claim 2, constituted by:
- 15 parts, by weight, of precipitated calcium carbonate
- 20 parts, by weight, of soda-based lubricating grease
- 65 parts, by weight, of petrolatum (90-95°C m.p.)
- 100 parts, by weight, of solvent, mainly trichloroethane or thrichloroethylene

6) Composition, according to claim 2, constituted by:
- 15 parts, by weight, of low-molecular-weight
  (about 1000) polyethylene
- 70 parts, by weight, of hyperbasic calcium alkylbenze-
  nesulphonate
- 15 parts, by weight, of precipitated barium carbonate
- 100 parts, by weight, of solvent

7) Exhaust gas pipes for internal combustion engines upon the internal surfaces of which has been applied the anticorrosion, protective composition according to one of the preceding claims.

8) Procedure for preparing the exhaust gas pipes of claim 7, consisting in the application of the protective composition according to one of the claims 1 to 6, on each structural part of the pipe, prior to assembling them.

9) Procedure for preparing the exhaust gas pipes of claim 7, consisting in the application of the protective composition according to one of the claims 1 to 6, on the completed pipe.